# FASCICULE DE BREVET EUROPEEN

(11) **EP 3 021 410 B1**
(45) Date de publication et mention de la délivrance du brevet: **07.12.2016**
(21) Numéro de dépôt: 15193693.7
(22) Date de dépôt: 09.11.2015
(51) Int. Cl.: H01M 8/1004, H01M 8/0273

(54) **PROCÉDÉ DE FABRICATION D'UNE CELLULE DE PILE À COMBUSTIBLE**
VERFAHREN ZUR HERSTELLUNG EINER BRENNSTOFFZELLE
METHOD FOR MANUFACTURING A FUEL CELL

(30) Priorité: 12.11.2014 FR 1460894
(43) Date de publication de la demande: 18.05.2016
(73) Titulaire: COMMISSARIAT A L'ENERGIE ATOMIQUE ET AUX ENERGIES ALTERNATIVES, 75015 Paris (FR)
(72) Inventeur: Barthe, Benoît, 73310 CHINDRIEUX (FR); Vincent, Rémi, 38000 GRENOBLE (FR)
(74) Mandataire: Thibon, Laurent

(56) Documents cités:
- WO-A1-2013/161200
- FR-A1- 2 992 776
- FR-A1- 3 001 833
- US-A1- 2014 004 442

## Description

### Domaine

La présente demande concerne le domaine des piles à combustible, et vise plus particulièrement un procédé de fabrication d'une cellule de pile à combustible. On s'intéresse ici plus particulièrement aux piles à combustible hydrogène-oxygène.

### Exposé de l'art antérieur

Une pile à combustible hydrogène-oxygène comprend classiquement une ou plusieurs cellules élémentaires comprenant chacune un empilement comportant une membrane d'électrolyte, une couche de catalyseur d'anode disposée du côté d'une première face de la membrane, une première électrode de diffusion gazeuse disposée du côté de la couche de catalyseur d'anode opposé à la membrane, une couche de catalyseur de cathode disposée du côté d'une deuxième face de la membrane opposée à la première face, et une deuxième électrode de diffusion gazeuse disposée du côté de la couche de catalyseur de cathode opposé à la membrane.

En fonctionnement, la première électrode ou électrode d'anode est en contact avec de l'hydrogène (H₂), par exemple de l'hydrogène pur, ou tout autre mélange gazeux adapté contenant de l'hydrogène, et la deuxième électrode ou électrode de cathode est en contact avec de l'oxygène (O₂), par exemple de l'oxygène pur, l'air ambiant, ou tout autre mélange gazeux adapté contenant de l'oxygène.

Dans ces conditions, quand la cellule est connectée à une charge, il apparaît une tension positive entre l'électrode d'anode et l'électrode de cathode de la cellule, et un courant circule dans la charge. Du côté de l'anode, le catalyseur transforme des molécules d'hydrogène gazeux en deux protons et deux électrons. Les électrons circulent à travers la charge, et les protons se déplacent à partir de la couche de catalyseur d'anode, à travers la membrane d'électrolyte, vers la couche de catalyseur de cathode, où ils réagissent avec l'oxygène pour former de l'eau (H₂O).

Généralement, une pile à combustible comprend plusieurs cellules élémentaires identiques ou similaires connectées en série. En pratique, les cellules sont empilées de façon que deux cellules voisines aient leurs faces de polarités opposées tournées l'une vers l'autre. Deux cellules voisines sont séparées par une plaque électriquement conductrice, parfois appelée plaque bipolaire, comportant des canaux permettant de distribuer les gaz réactants (respectivement l'hydrogène et l'oxygène) sur la surface des électrodes (respectivement l'anode de l'une des deux cellules et la cathode de l'autre cellule), et d'évacuer l'eau générée par la réaction se produisant côté cathode. L'empilement formé par l'alternance de cellules et de plaques bipolaires peut être maintenu en compression entre deux plaques de serrage.

Un problème qui se pose dans le domaine des piles à combustible hydrogène-oxygène est celui de la durée de vie des cellules élémentaires. En particulier, la membrane d'électrolyte est relativement fragile, et est soumise à des contraintes mécaniques importantes dans la mesure où ses dimensions, et notamment son épaisseur, peuvent varier de façon significative pendant les cycles de fonctionnement de la cellule, en fonction du taux d'humidité et/ou de la température de la cellule. Ainsi, les cellules se dégradent relativement rapidement, ce qui pose des problèmes de fiabilité, mais aussi de sécurité. En effet, dans certains cas de dégradation, par exemple en cas de rupture de la membrane d'électrolyte, l'hydrogène gazeux et l'oxygène gazeux risquent d'entrer en contact au sein d'une cellule, ce qui pourrait conduire à enflammer la cellule.

Il a déjà été proposé, par exemple dans la publication de la demande de
brevet US2008/0105354, de disposer, dans chaque cellule, de part et d'autre de la membrane d'électrolyte, au niveau d'une région périphérique de la membrane, des éléments de renfort permettant d'améliorer la robustesse de la cellule et d'augmenter ainsi sa durée de vie.

Toutefois, les inventeurs ont constaté que même avec de tels renforts périphériques, la robustesse des cellules élémentaires reste insuffisante pour certaines applications.

Il existe donc un besoin pour des cellules élémentaires de pile à combustible hydrogène-oxygène, qui soient plus résistantes que les cellules existantes.

La publication de demande de brevêt US2014/0004442 décrit un procédé de fabrication d'une cellule de pile à combustible comportant une étape de soudage de cadres à la cellule.

### Résumé

Ainsi, un mode de réalisation prévoit un procédé de fabrication d'une cellule de pile à combustible, comprenant les étapes suivantes : a) former un assemblage comprenant une membrane d'électrolyte, une couche de catalyseur d'anode du côté d'une première face de la membrane, une première électrode de diffusion gazeuse du côté de la couche de catalyseur d'anode opposé à la membrane, une couche de catalyseur de cathode du côté d'une deuxième face de la membrane opposée à la première face, une deuxième électrode de diffusion gazeuse du côté de la couche de catalyseur de cathode opposé à la membrane, un premier cadre de renfort disposé en regard d'une région périphérique de la membrane et s'étendant au moins en partie entre la membrane et la première électrode, et un deuxième cadre de renfort disposé en regard de la région périphérique de la membrane et s'étendant au moins en partie entre la membrane et la deuxième électrode ; b) fixer les premier et deuxième cadres de renfort de part et d'autre de la membrane ; et c) réaliser une soudure localisée d'au moins l'un des premier et deuxième cadres de renfort sur ou avec la membrane.

Selon un mode de réalisation, la soudure est localisée dans une zone située en regard d'une partie de la région périphérique de la membrane recouverte par le cadre, et ne s'étendant pas sur la totalité de ladite région périphérique.

Selon un mode de réalisation, la soudure est localisée dans une zone dans laquelle, à l'issue de l'étape b), la membrane est en contact avec le cadre.

Selon un mode de réalisation, la soudure est localisée dans une zone dans laquelle, à l'issue de l'étape b), la membrane et le cadre ne sont pas recouverts par une électrode.

Selon un mode de réalisation, la soudure est localisée dans une zone entourant de façon continue une partie active de la cellule.

Selon un mode de réalisation, la soudure est localisée dans une zone entourant de façon discontinue une partie active de la cellule.

Selon un mode de réalisation, les premier et deuxième cadres sont en des matériaux présentant des températures de fusion différentes, et, à l'étape c), la soudure localisée est effectuée du côté du cadre présentant la température de fusion la plus faible.

Selon un mode de réalisation, l'étape c) comprend une soudure localisée du premier cadre sur ou avec la membrane et une soudure localisée du deuxième cadre sur ou avec la membrane.

Selon un mode de réalisation, l'étape b) est réalisée par pressage à chaud de l'ensemble de la cellule.

Selon un mode de réalisation, la soudure localisée est réalisée à l'aide d'un faisceau laser.

Selon un mode de réalisation, le procédé comprend en outre une étape de découpe, à l'aide d'un faisceau laser, d'ouvertures dans des portions des premier et deuxième cadres.

Un autre mode de réalisation prévoit une cellule de pile à combustible comprenant un assemblage comportant : une membrane d'électrolyte, une couche de catalyseur d'anode du côté d'une première face de la membrane, une première électrode de diffusion gazeuse du côté de la couche de catalyseur d'anode opposé à la membrane, une couche de catalyseur de cathode du côté d'une deuxième face de la membrane opposée à la première face, une deuxième électrode de diffusion gazeuse du côté de la couche de catalyseur de cathode opposé à la membrane, un premier cadre de renfort disposé en regard d'une région périphérique de la membrane et s'étendant au moins en partie entre la membrane et la première électrode, et un deuxième cadre de renfort disposé en regard de ladite région périphérique de la membrane et s'étendant au moins en partie entre la membrane et la deuxième électrode, les premier et deuxième cadres de renfort étant fixés de part et d'autre de la membrane ; et une soudure localisée d'au moins l'un des premier et deuxième cadres de renfort sur ou avec la membrane.

Selon un mode de réalisation, la soudure localisée entoure de façon continue une partie active de la cellule.

Selon un mode de réalisation, la soudure localisée entoure de façon discontinue une partie active de la cellule.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1 et 2 sont respectivement une vue en coupe et une vue de dessus représentant de façon schématique un exemple de cellule élémentaire de pile à combustible ;
la figure 3 est une vue en coupe représentant de façon schématique un autre exemple de cellule élémentaire de pile à combustible ;
les figures 4 et 5 sont respectivement une vue en coupe et une vue de dessus d'une cellule élémentaire de pile à combustible, illustrant un exemple d'un mode de réalisation d'un procédé de fabrication d'une cellule élémentaire de pile à combustible ;
la figure 6 est une vue en coupe de la cellule des figures 4 et 5 après une période d'utilisation relativement importante ;
la figure 7 est une vue de dessus d'une cellule élémentaire de pile à combustible, illustrant une variante de réalisation du procédé des figures 4 et 5 ;
la figure 8 est une vue en coupe d'une cellule élémentaire de pile à combustible, illustrant une autre variante de réalisation du procédé des figures 4 et 5 ; et
la figure 9 est une vue en coupe d'une cellule élémentaire de pile à combustible, illustrant une autre variante de réalisation du procédé des figures 4 et 5.

### Description détaillée

Par souci de clarté, de mêmes éléments ont été désignés par de mêmes références aux différentes figures et, de plus, les diverses figures ne sont pas tracées à l'échelle. Par ailleurs, dans la présente demande, sauf indication contraire, les termes "approximativement", "sensiblement", "environ", "de l'ordre de", etc., signifient "à 20 % près", et des références directionnelles telles que "supérieur", "inférieur", "surmontant", "au-dessus", "latéral", etc., s'appliquent à des dispositifs orientés de la façon illustrée dans les vues en coupe correspondantes, étant entendu que, dans la pratique, ces dispositifs peuvent être orientés différemment.

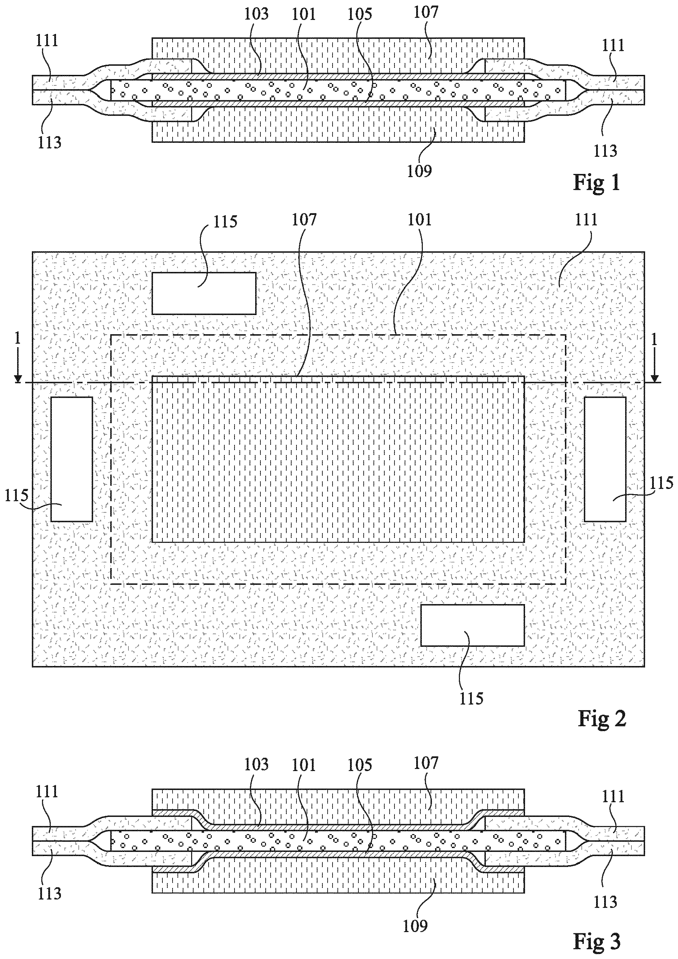

Les figures 1 et 2 sont respectivement une vue en coupe et une vue de dessus représentant de façon schématique un exemple d'une cellule élémentaire de pile à combustible. La figure 1 est une vue en coupe selon le plan 1-1 de la figure 2.

La cellule des figures 1 et 2 comprend une membrane ou couche d'électrolyte 101. La membrane 101 est une membrane à échange de protons, c'est-à-dire qu'elle permet le passage de protons tout en étant perméable aux gaz réactants, et en particulier à l'hydrogène et à l'oxygène, ainsi qu'en étant électriquement isolante. La membrane 101 peut être en un matériau polymère ou en un alliage de plusieurs matériaux polymères. La membrane 101 est par exemple en Nafion.

La membrane 101 est au moins partiellement revêtue, du côté de sa face supérieure, par une couche 103 d'un catalyseur d'anode, et, du côté de sa face inférieure, par une couche 105 d'un catalyseur de cathode. Le catalyseur d'anode 103 est par exemple en platine ou en un mélange comprenant du carbone et du platine, et le catalyseur de cathode 105 est par exemple en un mélange comprenant du platine et du cobalt.

La couche de catalyseur d'anode 103 est au moins partiellement revêtue par une électrode de diffusion gazeuse 107, ou électrode d'anode, et la couche de catalyseur de cathode 105 est au moins partiellement revêtue par une électrode de diffusion gazeuse 109, ou électrode de cathode. Les électrodes 105 et 109 sont électriquement conductrices, et contiennent des ouvertures permettant de distribuer les gaz réactants respectivement sur la surface supérieure de la couche de catalyseur d'anode 103 et sur la surface inférieure de la couche de catalyseur de cathode 105.

La cellule des figures 1 et 2 comprend en outre, du côté de la face supérieure de la membrane 101, un premier cadre de renfort 111 surmontant une région périphérique de la membrane. Dans l'exemple représenté, du côté du bord latéral intérieur du cadre 111, une partie du cadre 111 est pincée entre l'électrode d'anode 107 et la membrane 101. De plus, dans l'exemple représenté, du côté du bord latéral extérieur du cadre 111, une partie du cadre 111 s'étend au-delà du bord latéral de la membrane 101. Dans cet exemple, l'électrode 107 a, vu de dessus, une surface inférieure à celle de la membrane 101. Plus particulièrement, dans cet exemple, l'électrode 107 recouvre toute la surface supérieure de la membrane 101 à l'exception d'une bande périphérique de la membrane 101. Ainsi, une partie intermédiaire du cadre 111, située entre la partie intérieure (pincée entre l'électrode 107 et la membrane 101) et la partie extérieure (s'étendant au-delà du bord latéral de la membrane 101) du cadre 111, n'est pas surmontée par l'électrode 107. Le cadre 111 est en un matériau étanche aux gaz réactants, par exemple en un matériau polymère, par exemple du polytéréphtalate d'éthylène (PET) ou du polynaphtalate d'éthylène (PEN). Le cadre 111 peut être réalisé à partir d'une feuille d'un matériau polymère, dont une partie centrale est découpée pour ne conserver qu'une partie périphérique en forme de bande annulaire. Dans des conditions normales d'utilisation de la cellule, le cadre 111 est de préférence plus rigide et moins sujet aux déformations que la membrane 101.

La cellule des figures 1 et 2 comprend en outre, du côté de la face inférieure de la membrane 101, un deuxième cadre de renfort 113 en regard d'une région périphérique de la membrane. Dans l'exemple représenté, du côté du bord latéral intérieur du cadre 113, une partie du cadre 113 est pincée entre l'électrode de cathode 109 et la membrane 101. De plus, dans l'exemple représenté, du côté du bord latéral extérieur du cadre 113, une partie du cadre 113 s'étend au-delà du bord latéral de la membrane 101. Dans cet exemple, l'électrode 109 a, vu de dessus, une surface inférieure à celle de la membrane 101. Plus particulièrement, dans cet exemple, l'électrode 109 recouvre toute la surface inférieure de la membrane 101 à l'exception d'une bande périphérique de la membrane 101. A titre d'exemple, vu de dessus, l'électrode 109 occupe sensiblement la même surface que l'électrode 107. Ainsi, une partie intermédiaire du cadre 113, située entre la partie intérieure (pincée entre l'électrode 109 et la membrane 101) et la partie extérieure (s'étendant au-delà du bord latéral de la membrane 101) du cadre 113, n'est pas surmontée par l'électrode 109. Le cadre de renfort 113 est en un matériau étanche aux gaz réactants, par exemple en le même matériau que le cadre de renfort 111.

Dans cet exemple, la surface inférieure de la partie extérieure du cadre 111 est en contact avec la surface supérieure de la partie extérieure du cadre 113. A titre de variante (non représentée), les cadres 111 et 113 peuvent ne pas déborder au-delà du bord latéral de la membrane 101. Dans ce cas, les cadres 111 et 113 ne sont pas en contact l'un avec l'autre.

La partie active de la cellule est constituée par la portion de l'empilement des éléments 109, 105, 101, 103 et 107 située, vu de dessus, à l'intérieur des cadres 111 et 113.

Comme cela apparaît sur la figure 2, l'assemblage constitué par les cadres de renfort 111 et 113 peut comporter des ouvertures 115, notamment destinées à alimenter en gaz réactants les différentes cellules de la pile, et à évacuer l'eau produite lors du fonctionnement de la pile. Les ouvertures 115 sont par exemple situées au niveau de portions des cadres 111 et 113 non recouvertes par les électrodes 107 et 109.

La cellule de la figure 1 peut être réalisée de la façon suivante.

Les couches de catalyseur d'anode 103 et de catalyseur de cathode 105 sont d'abord déposées respectivement sur les faces supérieure et inférieure de la membrane 101.

Les cadres de renfort supérieur 111 et inférieur 113 sont ensuite disposés de part et d'autre de l'empilement formé par la membrane 101 et les couches de catalyseur 103 et 105, puis les électrodes 107 et 109 sont disposées respectivement du côté de la face supérieure et du côté de la face inférieure de l'ensemble formé par la membrane 101, les couches 103 et 105, et les cadres 111 et 113, selon l'agencement décrit ci-dessus.

L'ensemble comprenant la membrane 101, les couches 103 et 105, les renforts 111 et 113, et les électrodes 107 et 109, est ensuite pressé à chaud, notamment de façon à fixer, de façon étanche aux gaz réactants, les cadres de renfort 111 et 113 sur ou avec la membrane 101. Lors de cette étape, l'assemblage est par exemple porté à une température supérieure à la température de transition vitreuse de la membrane 101. La température de l'assemblage lors du pressage ne doit toutefois pas être trop élevée, de façon à ne pas dégrader la membrane 101 au niveau de la partie active de la cellule. A titre d'exemple non limitatif, l'étape de pressage à chaud est effectuée à une température comprise entre 100 et 200°C, et de préférence entre 120 et 160°C.

Les ouvertures 115 peuvent ensuite être formées par découpe laser dans des zones de superposition des cadres 111 et 113.

Comme cela apparaît sur la figure 1, il résulte du procédé de fabrication décrit ci-dessus que la partie intérieure du cadre 111 (située entre l'électrode 107 et la membrane 101) a sa face inférieure en contact avec la face supérieure de la couche de catalyseur 103 et sa face supérieure en contact avec la face inférieure de l'électrode 107, et que la partie intérieure du cadre 113 (située entre l'électrode 109 et la membrane 101) a sa face supérieure en contact avec la face inférieure de la couche de catalyseur 105 et sa face inférieure en contact avec la face supérieure de l'électrode 109.

Dans l'exemple représenté, vu de dessus, la surface de la couche de catalyseur d'anode 103 coïncide sensiblement avec la surface de l'électrode 107. Ainsi, la partie intermédiaire du cadre 111 (s'étendant entre le bord latéral de l'électrode 107 et le bord latéral de la membrane 101) est en contact avec la face supérieure de la membrane 101. De plus, dans cet exemple, vu de dessus, la surface de la couche de catalyseur de cathode 105 coïncide sensiblement avec la surface de l'électrode 107. Ainsi, la partie intermédiaire du cadre 113 (s'étendant entre le bord latéral de l'électrode 109 et le bord latéral de la membrane 101) est en contact avec la face inférieure de la membrane 101.

La figure 3 est une vue en coupe représentant de façon schématique un autre exemple de cellule élémentaire de pile à combustible. La cellule de la figure 3 comprend les mêmes éléments que la cellule des figures 1 et 2, et diffère de la cellule des figures 1 et 2 essentiellement par son procédé de fabrication.

La cellule de la figure 3 est réalisée de la façon suivante.

Les couches de catalyseur d'anode 103 et de catalyseur de cathode 105 sont déposées respectivement sur la face inférieure de l'électrode 107 et sur la face supérieure de l'électrode 109.

Les cadres de renfort supérieur 111 et inférieur 113 sont disposés de part et d'autre de la membrane 101, puis les électrodes 107 et 109, respectivement revêtues par les couches de catalyseur 103 et 105, sont disposées respectivement du côté de la face supérieure et du côté de la face inférieure de l'ensemble formé par la membrane 101 et les cadres 111 et 113, selon l'agencement décrit ci-dessus.

L'ensemble de la cellule est ensuite pressé à chaud, comme dans l'exemple des figures 1 et 2, de façon à fixer, de façon étanche aux gaz réactants, les cadres de renfort 111 et 113 sur ou avec la membrane 101.

Les ouvertures 115 (non visibles sur la figure 3) peuvent ensuite être formées dans les cadres 111 et 113, comme dans l'exemple des figures 1 et 2.

Ainsi, la cellule de la figure 3 diffère de la cellule des figures 1 et 2 essentiellement en ce que, dans l'exemple de la figure 3, toute la partie du cadre 111 située en regard de la membrane 101, et notamment la partie intérieure du cadre 111 (disposée entre l'électrode 107 et la membrane 101), a sa face inférieure en contact avec la face supérieure de la membrane 101 et sa face supérieure en contact avec la face inférieure de la couche 103, et, toute la partie du cadre 113 située en regard de la membrane 101, et notamment la partie intérieure du cadre 113 (disposée entre l'électrode 109 et la membrane 101), a sa face supérieure en contact avec la face inférieure de la membrane 101 et sa face inférieure en contact avec la face supérieure de la couche 105.

Des essais réalisés par les inventeurs ont montré que malgré la présence des renforts périphériques 111 et 113, les cellules de pile à combustible du type décrit en relation avec les figures 1, 2 et 3, sont susceptibles de se dégrader. En particulier, les inventeurs ont constaté qu'après un certain temps d'utilisation d'une cellule, il peut se produire une délamination dans une région périphérique de la cellule, liée notamment aux variations répétées de l'épaisseur de la membrane 101. En particulier, le renfort supérieur 111 et/ou le renfort inférieur 113 peuvent se décoller de la membrane 101. Une telle délamination est tout particulièrement critique si elle conduit à la fois à une perte d'étanchéité de la fixation entre le renfort 111 et la membrane 101, et à une perte d'étanchéité de la fixation entre le renfort 113 et la membrane 101. En effet, dans ce cas, l'hydrogène gazeux et l'oxygène gazeux alimentant la cellule de part et d'autre de la membrane 101, sont susceptible d'entrer en contact, et il existe un risque que la cellule s'enflamme.

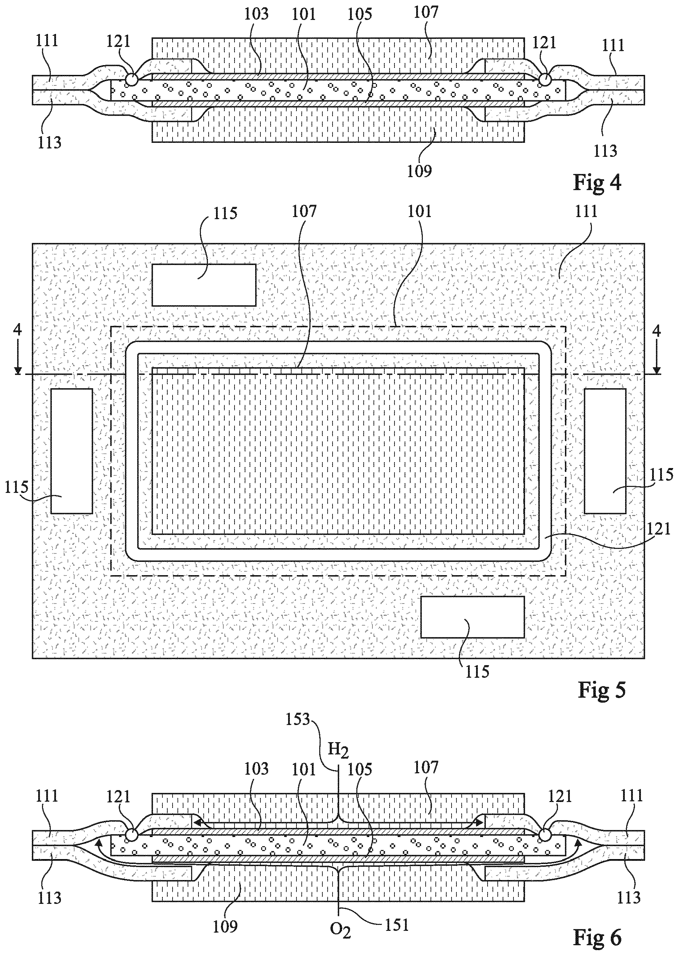

Les figures 4 et 5 sont respectivement une vue en coupe et une vue de dessus d'une cellule élémentaire de pile à combustible, illustrant un exemple d'un mode de réalisation d'un procédé de fabrication d'une cellule élémentaire de pile à combustible. La figure 4 est une vue en coupe selon le plan 4-4 de la figure 5.

La cellule des figures 4 et 5 comprend les mêmes éléments que la cellule des figures 1 et 2, et diffère de la cellule des figures 1 et 2 principalement par son procédé de fabrication.

Le procédé de fabrication des figures 4 et 5 peut comprendre sensiblement les mêmes étapes que le procédé de fabrication décrit en relation avec les figures 1 et 2, et diffère du procédé de fabrication des figures 1 et 2 essentiellement en ce qu'il comprend, après l'étape de fixation étanche des cadres de renfort 111 et 113 sur la membrane 101, une étape supplémentaire de soudure localisée du cadre de renfort 111 sur ou avec la membrane 101, au niveau d'une zone 121 du cadre 111.

Vu de dessus, la zone 121 de soudure du cadre 111 sur la membrane 101 est localisée sur une partie seulement de la surface de la portion de cadre 111 superposée à la membrane 111. Pour faciliter la réalisation de la soudure, la zone de soudure 121 est de préférence située au niveau d'une portion du cadre 111 non recouverte par l'électrode 107. Les modes de réalisation décrits ne se limitent toutefois pas à ce cas particulier. De préférence, la zone de soudure localisée 121 est située sur une partie du cadre 111 en contact direct avec la membrane 101.

Dans l'exemple représenté, la zone de soudure localisée 121 a, vu de dessus (figure 5), la forme d'un cadre continu entourant entièrement la partie active de la cellule.

La soudure localisée peut être réalisée à l'aide d'un faisceau laser, que l'on fait balayer la zone 121. Dans ce cas, un avantage est que le même outil peut être utilisé pour réaliser la soudure et pour réaliser les découpes des ouvertures 115 dans les cadres 111 et 113. Lors de l'étape de soudure, pour ne pas risquer de transpercer la cellule, le faisceau laser peut être défocalisé et/ou réglé à une puissance différente et/ou réglé à une vitesse de balayage différente du réglage utilisé lors de l'étape de découpe des ouvertures 115.

Plus généralement, la soudure localisée du cadre 111 sur la membrane 101 peut être réalisée au moyen de toute autre source de chaleur permettant de chauffer de façon localisée une partie de la surface du cadre 111, par exemple au moyen d'un motif métallique chauffé que l'on vient appliquer sur le cadre 111, d'un flux d'air chaud localisé, d'un fer à souder, etc.

Un avantage du procédé de fabrication des figures 4 et 5 est que la soudure localisée du cadre 111 sur la membrane 101 renforce de façon significative la résistance à la délamination de la cellule. En particulier, la soudure étant localisée en dehors de la partie active de la cellule, elle peut, sans risquer de dégrader la partie active de la cellule, être réalisée à une température supérieure à la température utilisée lors de l'étape de pressage à chaud de la cellule. A titre d'exemple, la soudure localisée du cadre 111 sur la membrane 101 peut être effectuée à une température comprise entre 200 et 400°C. Il en résulte une fixation du cadre 111 sur la membrane 101 plus solide que celle obtenue lors de l'étape de pressage à chaud de la cellule.

En particulier, les essais réalisés par les inventeurs ont montré que du fait de la présence de la soudure localisée du cadre 111 sur la membrane 101, même après une durée d'utilisation importante de la cellule, le cadre 111 ne se décolle pas de la membrane 101, et la fixation entre le cadre 111 et la membrane 101 reste étanche. Ainsi, la soudure localisée du cadre 111 sur la membrane 101 évite ou limite considérablement le risque d'incendie par mise en contact d'hydrogène et d'oxygène gazeux au sein de la cellule. En effet, même si le cadre 113 (qui ne comporte pas de soudure localisée dans cet exemple) venait à se décoller de la membrane 101, l'oxygène amené via l'électrode de cathode 109 resterait isolé de l'hydrogène amené via l'électrode d'anode 107, par la zone de fixation étanche du cadre 111 sur la membrane 101.

Ceci est illustré par la figure 6, qui représente une vue en coupe de la cellule des figures 4 et 5 après une utilisation particulièrement intense, ayant entrainé une délamination entre le cadre 113 et la membrane 101. Sur la figure 6, on peut observer que le cadre 113 n'est plus fixé de façon étanche sur toute la périphérie de la face inférieure de la membrane 101. Il en résulte que de l'oxygène injecté côté cathode peut venir en contact avec la face inférieure du cadre 111, à l'extérieur du cadre formé par la zone de soudure localisée 121. Toutefois, du fait de la présence de la zone de soudure localisée 121, l'étanchéité de la fixation du cadre 111 sur la face supérieure de la membrane 101 est préservée. Ainsi, l'oxygène gazeux susceptible de s'échapper latéralement de la cellule, côté cathode, reste séparé de l'hydrogène gazeux injecté côté anode. Ceci est illustré par les lignes 151 et 153 de la figure 6, qui représentent respectivement, de façon schématique, la circulation de l'oxygène gazeux et de l'hydrogène gazeux dans la cellule.

On notera que dans le mode de réalisation des figures 4 et 5, la zone de soudure localisée 121 entoure (vu de dessus) de façon continue la partie active de la cellule. Ainsi, la soudure 121 présente non seulement l'avantage de renforcer la résistance mécanique de l'assemblage, côté anode, prévenant ainsi les risques de délamination entre le cadre 111 et la membrane 101, mais présente aussi l'avantage de constituer elle-même une zone localisée de fixation étanche du cadre 111 sur ou avec la membrane 101, qui prévient la mise en contact de l'oxygène gazeux et de l'hydrogène gazeux.

A titre de variante, au lieu de réaliser une soudure localisée du cadre 111 sur la membrane 101, on peut, de façon similaire à ce qui a été décrit ci-dessus, réaliser une soudure localisée du cadre 113 sur ou avec la membrane 101. Ceci permet d'obtenir sensiblement les mêmes avantages de résistance et de sécurité accrues que lorsque la soudure est située côté cadre 111.

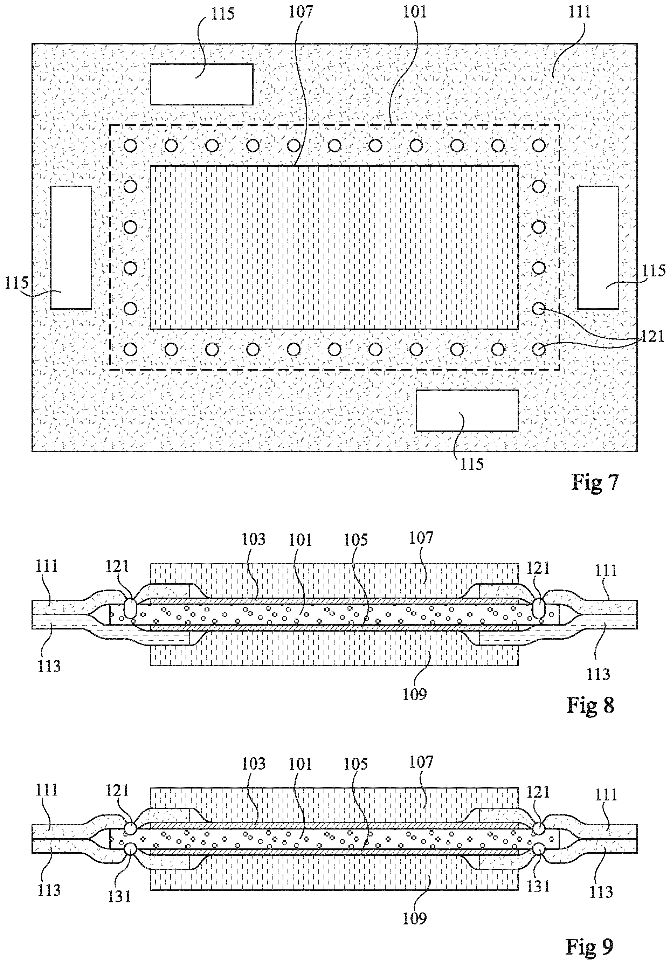

La figure 7 est une vue de dessus d'une cellule élémentaire de pile à combustible, illustrant une variante de réalisation du procédé décrit en relation avec les figures 4 et 5.

La cellule de la figure 7 diffère de la cellule des figures 4 et 5 essentiellement en ce que, dans l'exemple de la figure 7, la zone de soudure localisée 121 du cadre 111 sur la membrane 101 n'entoure pas de façon continue la partie active de la cellule, mais l'entoure de façon discontinue. Plus particulièrement, dans l'exemple de la figure 7, vu de dessus, la zone de soudure 121 est constituée par une pluralité de points de soudure disjoints régulièrement répartis autour de la partie active de la cellule. Les inventeurs ont en effet constaté que, même discontinue, une soudure localisée du cadre 111 (ou 113) sur la membrane 101 permet d'accroître de façon significative la résistance à la délamination, et de limiter les risques de perte d'étanchéité de la fixation entre le cadre de renfort 111 et la membrane 101. D'autres motifs de zone de soudure discontinue 121 peuvent être prévus que celui représenté en figure 7. De préférence, la distance entre deux portions disjointes voisines de la zone de soudure 121 n'excède pas 1 centimètre. De plus, des points de soudure sont de préférence prévus au niveau des régions de coin de la cellule, qui sont particulièrement sujettes à la délamination.

La figure 8 est une vue en coupe d'une cellule élémentaire de pile à combustible, illustrant une variante de réalisation du procédé décrit en relation avec les figures 4 et 5. L'exemple de la figure 8 diffère de l'exemple des figures 4 et 5 en ce que, dans l'exemple de la figure 8, les cadres de renfort supérieur 111 et inférieur 113 sont en des matériaux différents. Le cadre sur lequel est réalisée la soudure localisée 121, à savoir le cadre 111 dans l'exemple représenté, est en un matériau présentant une température de fusion inférieure à celle du cadre ne subissant pas de soudure localisée, à savoir le cadre 113 dans cet exemple. A titre d'exemple non limitatif, le cadre 111 est en un polymère de type PET présentant une température de fusion de l'ordre de 180°C, par exemple du Mylar, et le cadre 113 est en un polyimide présentant une température de l'ordre de 400°C, par exemple du Kapton.

Un avantage du mode de réalisation de la figure 8 est que la présence, du côté opposé à la zone de soudure localisée 121, d'un cadre de renfort 113 présentant une température de fusion relativement élevée, permet de réaliser une soudure profonde, et donc particulièrement résistante, entre le cadre 111 et la membrane 101, sans risquer de transpercer l'empilement formé par le cadre 111, la membrane 101 et le cadre 113.

La figure 9 est une vue en coupe d'une cellule élémentaire de pile à combustible, illustrant une variante de réalisation du procédé décrit en relation avec les figures 4 et 5. L'exemple de la figure 9 diffère de l'exemple des figures 4 et 5 essentiellement en ce que, pour améliorer encore la résistance des cellules à la délamination de la cellule, on réalise une soudure localisée 121, continue ou discontinue, du cadre de renfort supérieur 111 sur la membrane 101, et une soudure localisée 131, continue ou discontinue, du cadre de renfort 113 sur la membrane 101. Dans le cas où les zones de soudure 121 et 131 sont toutes deux discontinues, les motifs des zones de soudure 121 et 131 sont de préférence complémentaires, c'est-à-dire que les zones soudées du motif 121 sont en regard de zones non soudées du motif 131, et réciproquement. Ceci permet d'obtenir des cellules particulièrement résistantes.

Des modes de réalisation particuliers ont été décrits. Diverses variantes et modifications apparaîtront à l'homme de l'art.

En particulier, les modes de réalisation décrits ne se limitent pas à l'exemple particulier décrit ci-dessus dans lequel l'étape de fixation étanche des cadres de renfort 111 et 113 sur la membrane 110, préalablement à l'étape de soudure localisée d'au moins un des cadres 111 et 113 sur la membrane 101, est effectuée par pressage à chaud de la cellule. A titre de variante, les cadres 111 et 113 peuvent être fixés sur ou avec la membrane par tout autre moyen adapté, par exemple au moyen d'un adhésif étanche aux gaz réactants.

En outre, les modes de réalisation décrits en relation avec les figures 4 à 9 sont compatibles avec un procédé de fabrication du type décrit en relation avec la figure 3, dans lequel les couches de catalyseur 103 et 105 sont déposées sur les électrodes 107 et 109 respectivement, plutôt que sur les faces supérieure et inférieure de la membrane 101.

De plus, diverses variantes de réalisation ont été décrites ci-dessus. On notera que l'homme de l'art pourra combiner divers éléments de ces diverses variantes sans faire preuve d'activité inventive.

## Revendications

1. Procédé de fabrication d'une cellule de pile à combustible, comprenant les étapes suivantes :
a) former un assemblage comprenant une membrane d'électrolyte (101), une couche de catalyseur d'anode (103) du côté d'une première face de la membrane (101), une première électrode de diffusion gazeuse (107) du côté de la couche de catalyseur d'anode (103) opposé à la membrane (101), une couche de catalyseur de cathode (105) du côté d'une deuxième face de la membrane (101) opposée à la première face, une deuxième électrode de diffusion gazeuse (109) du côté de la couche de catalyseur de cathode (105) opposé à la membrane (101), un premier cadre de renfort (111) disposé en regard d'une région périphérique de la membrane (101) et s'étendant au moins en partie entre la membrane (101) et la première électrode (107), et un deuxième cadre de renfort (113) disposé en regard de ladite région périphérique de la membrane (101) et s'étendant au moins en partie entre la membrane (101) et la deuxième électrode (109) ;
b) fixer les premier (111) et deuxième (113) cadres de renfort de part et d'autre de la membrane (101) ; et
c) réaliser une soudure localisée d'au moins l'un des premier (111) et deuxième (113) cadres de renfort avec la membrane (101),
dans lequel ladite soudure est localisée dans une zone (121) située en regard d'une partie de la région périphérique de la membrane (101) recouverte par ledit au moins un cadre (111, 113), et ne s'étendant pas sur la totalité de ladite région périphérique.

2. Procédé selon la revendication 1, dans lequel ladite soudure est localisée dans une zone (121) dans laquelle, à l'issue de l'étape b), la membrane (101) est en contact avec ledit au moins un cadre (111, 113).

3. Procédé selon la revendication 1 ou 2, dans lequel ladite soudure est localisée dans une zone (121) dans laquelle, à l'issue de l'étape b), la membrane (101) et ledit au moins un cadre (111, 113) ne sont pas recouverts par une électrode (107, 109).

4. Procédé selon l'une quelconque des revendications 1 à 3, dans lequel ladite soudure est localisée dans une zone (121) entourant de façon continue une partie active de la cellule.

5. Procédé selon l'une quelconque des revendications 1 à 3, dans lequel ladite soudure est localisée dans une zone (121) entourant de façon discontinue une partie active de la cellule.

6. Procédé selon l'une quelconque des revendications 1 à 5, dans lequel les premier (111) et deuxième (113) cadres sont en des matériaux présentant des températures de fusion différentes, et dans lequel, à l'étape c), la soudure localisée est effectuée du côté du cadre présentant la température de fusion la plus faible.

7. Procédé selon l'une quelconque des revendications 1 à 6, dans lequel l'étape c) comprend une soudure localisée du premier cadre (111) avec la membrane (101) et une soudure localisée du deuxième cadre (113) avec la membrane (101).

8. Procédé selon l'une quelconque des revendications 1 à 7, dans lequel l'étape b) est réalisée par pressage à chaud de l'ensemble de la cellule.

9. Procédé selon l'une quelconque des revendications 1 à 8, dans lequel la soudure localisée (121) est réalisée à l'aide d'un faisceau laser.

10. Procédé selon l'une quelconque des revendications 1 à 9, comprenant en outre une étape de découpe, à l'aide d'un faisceau laser, d'ouvertures (115) dans des portions des premier (111) et deuxième (113) cadres.

11. Cellule de pile à combustible comprenant un assemblage comportant :
une membrane d'électrolyte (101), une couche de catalyseur d'anode (103) du côté d'une première face de la membrane (101), une première électrode de diffusion gazeuse (107) du côté de la couche de catalyseur d'anode (103) opposé à la membrane (101), une couche de catalyseur de cathode (105) du côté d'une deuxième face de la membrane (101) opposée à la première face, une deuxième électrode de diffusion gazeuse (109) du côté de la couche de catalyseur de cathode (105) opposé à la membrane (101), un premier cadre de renfort (111) disposé en regard d'une région périphérique de la membrane (101) et s'étendant au moins en partie entre la membrane (101) et la première électrode (107), et un deuxième cadre de renfort (113) disposé en regard de ladite région périphérique de la membrane (101) et s'étendant au moins en partie entre la membrane (101) et la deuxième électrode (109), les premier (111) et deuxième (113) cadres de renfort étant fixés de part et d'autre de la membrane (101) ; et
une soudure localisée (121) d'au moins l'un des premier (111) et deuxième (113) cadres de renfort avec la membrane (101),
dans laquelle ladite soudure est localisée dans une zone (121) située en regard d'une partie de la région périphérique de la membrane (101) recouverte par ledit au moins un cadre (111, 113), et ne s'étendant pas sur la totalité de ladite région périphérique.

12. Cellule selon la revendication 11, dans laquelle ladite soudure localisée (121) entoure de façon continue une partie active de la cellule.

13. Cellule selon la revendication 11, dans laquelle ladite soudure localisée (121) entoure de façon discontinue une partie active de la cellule.

## Patentansprüche

1. Ein Verfahren zum Herstellen einer Zelleneinheit einer Brennstoffzelle, wobei das Verfahren die folgenden Schritte aufweist:
a) Ausbilden einer Anordnung, wobei die Anordnung eine elektrolytische Membran (101) aufweist, eine Anodenkatalysatorschicht (103) auf der Seite einer ersten Oberfläche der Membran (101), eine erste Gasdiffusionselektrode (107) auf der Seite der Anodenkatalysatorschicht (103) gegenüber der Membran (101), eine Kathodenkatalysatorschicht (105) auf der Seite einer zweiten Oberfläche der Membran (101), gegenüber der ersten Oberfläche, eine zweite Gasdiffusionselektrode (109) auf der Seite der Kathodenkatalysatorschicht (105), gegenüber der Membran (101), einen ersten Verstärkungsrahmen (111), der gegenüber eines Umfangsbereichs der Membran (101) angeordnet ist, und der sich wenigstens teilweise zwischen die Membran (101) und die erste Elektrode (107) erstreckt, und einen zweiten Verstärkungsrahmen (113), der gegenüber des Umfangsbereichs der Membran (101) angeordnet ist und der sich wenigstens teilweise zwischen die Membran (101) und die zweite Elektrode (109) erstreckt;
b) Befestigen des ersten (111) und des zweiten (113) Verstärkungsrahmens auf jeder Seite der Membran (101); und
c) Ausführen einer lokalen Verschweißung von wenigstens einem des ersten (111) und des zweiten (113) Verstärkungsrahmens mit der Membran (101),
wobei die Verschweißung in einem Bereich (121) angeordnet ist, der gegenüber eines Teils des Umfangsbereichs der Membran (101) angeordnet ist, und der von dem wenigstens einen Rahmen (111, 113) abgedeckt ist, und der sich nicht über die Gesamtheit des Umfangsbereichs erstreckt.

2. Das Verfahren nach Anspruch 1, wobei die Verschweißung in einem Bereich (121) angeordnet ist, wo, am Ende des Schrittes b), die Membran (101) in Kontakt mit dem wenigstens einen Rahmen (111, 113) ist.

3. Das Verfahren nach Anspruch 1 oder 2, wobei die Verschweißung in einem Bereich (121) angeordnet ist, wo, am Ende des Schrittes b), die Membran (101) und der wenigstens eine Rahmen (111, 113) nicht von einer der Elektroden (107, 109) abgedeckt ist.

4. Das Verfahren nach einem der Ansprüche 1 bis 3, wobei die Verschweißung in einem Bereich (121) angeordnet ist, der kontinuierlich einen aktiven Teil der Zelleneinheit umgibt.

5. Das Verfahren nach einem der Ansprüche 1 bis 3, wobei die Verschweißung in einem Bereich (121) angeordnet ist, der nicht kontinuierlich einen aktiven Teil der Zelleneinheit umgibt.

6. Das Verfahren nach einem der Ansprüche 1 bis 5, wobei der erste (111) und der zweite (113) Rahmen aus Materialien hergestellt sind, die unterschiedliche Schmelztemperaturen aufweisen, und wobei, beim Schritt c), die lokale Verschweißung auf der Seite des Rahmens ausgeführt wird, der die niedrigste Schmelztemperatur aufweist.

7. Das Verfahren nach einem der Ansprüche 1 bis 6, wobei der Schritt c) eine lokale Verschweißung des ersten Rahmens (111) mit der Membran (101) und eine lokale Verschweißung des zweiten Rahmens (113) mit der Membran (101) aufweist.

8. Das Verfahren nach einem der Ansprüche 1 bis 7, wobei der Schritt b) durch Heisspressen der gesamten Zelle ausgeführt wird.

9. Das Verfahren nach einem der Ansprüche 1 bis 8, wobei die lokale Verschweißung (121) mittels eines Laserstrahls ausgeführt wird.

10. Das Verfahren nach einem der Ansprüche 1 bis 9, wobei das Verfahren ferner einen Schritt des Schneidens von Öffnungen (115) in Teile des ersten Rahmens (111) und des zweiten Rahmens (113) aufweist, wobei das Schneiden mittels eines Laserstrahls ausgeführt wird.

11. Eine Zelleneinheit einer Brennstoffzelle, wobei die Zelleneinheit eine Anordnung aufweist, die Folgendes aufweist:
eine elektrolytische Membran (101), eine Anodenkatalysatorschicht (103) auf der Seite einer ersten Oberfläche der Membran (101), eine erste Gasdiffusionselektrode (107) auf der Seite der Anodenkatalysatorschicht (103) gegenüber der Membran (101), eine Kathodenkatalysatorschicht (105) auf der Seite einer zweiten Oberfläche der Membran (101), gegenüber der ersten Oberfläche, eine zweite Gasdiffusionselektrode (109) auf der Seite der Kathodenkatalysatorschicht (105), gegenüber der Membran (101), einen ersten Verstärkungsrahmen (111), der gegenüber eines Umfangsbereichs der Membran (101) angeordnet ist, und der sich wenigstens teilweise zwischen die Membran (101) und die erste Elektrode (107) erstreckt, und einen zweiten Verstärkungsrahmen (113), der gegenüber des Umfangsbereichs der Membran (101) angeordnet ist und der sich wenigstens teilweise zwischen die Membran (101) und die zweite Elektrode (109) erstreckt, wobei der erste (111) und der zweite (113) Rahmen auf jeder Seite der Membran (101) befestigt sind; und
eine lokale Verschweißung (121) von wenigstens einem des ersten (111) und des zweiten (113) Verstärkungsrahmens mit der Membran (101),
wobei die Verschweißung in einem Bereich (121) angeordnet ist, der gegenüber eines Teils des Umfangsbereichs der Membran (101) angeordnet ist, und der von dem wenigstens einen Rahmen (111, 113) abgedeckt ist, und der sich nicht über die Gesamtheit des Umfangsbereichs erstreckt.

12. Die Zelleinheit nach Anspruch 11, wobei die lokale Verschweißung (121) kontinuierlich einen aktiven Teil der Zelleneinheit umgibt.

13. Die Zelleinheit nach Anspruch 11, wobei die lokale Verschweißung (121) nicht kontinuierlich einen aktiven Teil der Zelleneinheit umgibt.

## Claims

1. A method of manufacturing a cell unit of a fuel cell, comprising the steps of:
a) forming an assembly including an electrolyte membrane (101), an anode catalyst layer (103) on the side of a first surface of the membrane (101), a first gas diffusion electrode (107) on the side of the anode catalyst layer (103) opposite to the membrane (101), a cathode catalyst layer (105) on the side of a second surface of the membrane (101) opposite to the first surface, a second gas diffusion electrode (109) on the side of the cathode catalyst layer (105) opposite to the membrane (101), a first reinforcement frame (111) arranged opposite a peripheral region of the membrane (101) and at least partly extending between the membrane (101) and the first electrode (107), and a second reinforcement frame (113) arranged opposite said peripheral region of the membrane (101) and at least partly extending between the membrane (101) and the second electrode (109);
b) fastening the first (111) and second (113) reinforcement frames on either side of the membrane (101); and
c) performing a local welding of at least one of the first (111) and second (113) reinforcement frames with the membrane (101),
wherein said welding is located in an area (121) located opposite a portion of the peripheral region of the membrane (101) covered with said at least one frame (111, 113), and which does not extend over the entirety of said peripheral region.

2. The method of claim 1, wherein said welding is located in an area (121) where, at the end of step b), the membrane (101) is in contact with said at least one frame (111, 113).

3. The method of claim 1 or 2, wherein said welding is located in an area (121) where, at the end of step b), the membrane (101) and said at least one frame (111, 113) are not covered with an electrode (107, 109).

4. The method of any of claims 1 to 3, wherein said welding is located in an area (121) continuously surrounding an active portion of the cell unit.

5. The method of any of claims 1 to 3, wherein said welding is located in an area (121) discontinuously surrounding an active portion of the cell unit.

6. The method of any of claims 1 to 5, wherein the first (111) and second (113) frames are made of materials having different melting temperatures and wherein, at step c), the local welding is performed on the side of the frame having the lowest melting temperature.

7. The method of any of claims 1 to 6, wherein step c) comprises a local welding of the first frame (111) with the membrane (101) and a local welding of the second frame (113) with the membrane (101).

8. The method of any of claims 1 to 7, wherein step b) is carried out by hot pressing of the entire cell.

9. The method of any of claims 1 to 8, wherein the local welding (121) is performed by means of a laser beam.

10. The method of any of claims 1 to 9, further comprising a step of cutting, by means of a laser beam, openings (115) in portions of the first (111) and second (113) frames.

11. A cell unit of a fuel cell comprising an assembly comprising:
an electrolyte membrane (101), an anode catalyst layer (103) on the side of a first surface of the membrane (101), a first gas diffusion electrode (107) on the side of the anode catalyst layer (103) opposite to the membrane (101), a cathode catalyst layer (105) on the side of a second surface of the membrane (101) opposite to the first surface, a second gas diffusion electrode (109) on the side of the cathode catalyst layer (105) opposite to the membrane (101), a first reinforcement frame (111) arranged opposite a peripheral region of the membrane (101) and at least partly extending between the membrane (101) and the first electrode (107), and a second reinforcement frame (113) arranged opposite said peripheral region of the membrane (101) and at least partly extending between the membrane (101) and the second electrode (109), the first (111) and second (113) reinforcement frames being fastened on either side of the membrane (101); and
a local welding (121) of at least one of the first (111) and second (113) reinforcement frames with the membrane (101),
wherein said welding is located in an area (121) located opposite a portion of the peripheral region of the membrane (101) covered with said at least one frame (111, 113), and which does not extend over the entirety of said peripheral region.

12. The cell unit of claim 11, wherein said local welding (121) continuously surrounds an active portion of the cell unit.

13. The cell unit of claim 11, wherein said local welding (121) discontinuously surrounds an active portion of the cell unit.
